# EUROPEAN PATENT APPLICATION

(11) **EP 4 027 589 A1**
(43) Date of publication of application: **13.07.2022**
(21) Application number: 20861653.2
(22) Date of filing: 31.08.2020
(51) Int. Cl.: H04L 12/28

(54) **SUBMARINE CABLE SYSTEM, SUBMARINE APPLIANCE CONTROL DEVICE, METHOD FOR CONTROLLING SUBMARINE APPLIANCE, AND NON-TRANSITORY COMPUTER-READABLE MEDIUM**

(30) Priority: 02.09.2019 JP 2019159467
(71) Applicant: NEC Corporation, 108-8001 Tokyo (JP)
(72) Inventor: KANAI Taiki, Tokyo 108-8001 (JP)
(74) Representative: Reeve, Nicholas Edward
(86) International application number: PCT/JP2020/032824
(87) International publication number: WO 2021/044993

(57) **Abstract**

To simplify the works a user needs to perform while ensuring a proper operation of a submarine device. A submarine cable system (10) according to an example embodiment includes: a submarine device (11); a first line terminal equipment (1) and a second line terminal equipment each adapted to perform communication with the submarine device (11); and a control apparatus (20) configured to select either one of the first line terminal equipment (1) or the second line terminal equipment (2) based on an order of priorities thereof and to instruct the selected one of the line terminal equipment to output a control signal to the submarine device (11). The order of the priorities is based on a distance from the first line terminal equipment (1) to the submarine device (11) and a distance from the second line terminal equipment (2) to the submarine device (11).

## Description

### Technical Field

The present disclosure relates to a submarine cable system, a submarine device control apparatus, a method for controlling a submarine device, and a program.

### Background Art

There is a submarine cable system in which a line terminal equipment installed on land and submarine devices laid on the seabed such as optical splitting devices and repeaters are connected with one another by a cable (e.g. Patent Literatures 1 and 2). In this kind of submarine cable system, the submarine devices are controlled in accordance with instructions from the line terminal equipment.

### Citation List

### Patent Literature

Patent Literature 1: Japanese Unexamined Patent Application Publication No. 2010-226167
Patent Literature 2: Japanese Unexamined Patent Application Publication No. H09-289494

### Summary of Invention

When a plurality of line terminal equipment give different instructions to a specific submarine device, the submarine device cannot operate properly. Therefore, it is desirable that the submarine device be controlled in accordance with the instructions from one line terminal equipment. However, a general submarine device is connected to a plurality of line terminal equipment. In order for the submarine device to be controlled in accordance with the instructions from one line terminal equipment, it has been necessary for the user to select, from among the plurality of line terminal equipment connected to the submarine device, a line terminal equipment which is suitable for giving instructions to the submarine device. As a result, the work which the user had to perform for ensuring a proper operation of the submarine device was complicated.

An object of the present disclosure is to provide, in view of the aforementioned problem, a submarine cable system, a submarine device control apparatus, a method for controlling a submarine device, and a program, each adapted to simplify the works a user needs to perform while ensuring a proper operation of the submarine device.

An example aspect of the present disclosure is a submarine cable system including:
a submarine device;
a first line terminal equipment adapted to perform communication with the submarine device;
a second line terminal equipment adapted to perform communication with the submarine device; and
a control apparatus configured to select either one of the first line terminal equipment or the second line terminal equipment based on an order of priorities thereof and to instruct the selected one of the line terminal equipment to output a control signal to the submarine device.

An example aspect of the present disclosure is a submarine device control apparatus including:
a holding unit configured to hold an order of priorities of a first line terminal equipment and a second line terminal equipment, both adapted to perform communication with a submarine device;
a selecting unit configured to select either one of the first line terminal equipment or the second line terminal equipment in accordance with the order of the priorities; and
an instructing unit configured to instruct the selected line terminal equipment to output a control signal to the submarine device.

An example aspect of the present disclosure is a method for controlling a submarine device including:
selecting, in accordance with an order of priorities of a first line terminal equipment and a second line terminal equipment both adapted to perform communication with a submarine device, either one of the first line terminal equipment or the second line terminal equipment; and
instructing the selected line terminal equipment to output a control signal to the submarine device.

An example aspect of the present disclosure is a program for causing a computer to execute the processes of:
selecting, in accordance with an order of priorities of a first line terminal equipment and a second line terminal equipment both adapted to perform communication with a submarine device, either one of the first line terminal equipment or the second line terminal equipment; and
instructing the selected line terminal equipment to output a control signal to the submarine device.

According to the present disclosure, a submarine cable system, a control apparatus, a method for controlling a submarine device, and a program, each adapted to simplify the work a user needs to perform while ensuring a proper operation of the submarine device.

### Brief Description of Drawings

Fig. 1 is a diagram showing a configuration of a submarine cable system according to an example embodiment;
Fig. 2 is a diagram showing a configuration of a control apparatus according to the example embodiment;
Fig. 3 is a flowchart showing an example of an operation of a submarine cable system according to an example;
Fig. 4 is a diagram showing another configuration of a submarine cable system according to an example embodiment;
Fig. 5 is a diagram showing a configuration of a submarine cable system according to an example;
Fig. 6 is a diagram illustrating a case where a cable failure has occurred in the submarine cable system shown in Fig. 5;
Fig. 7 is a diagram showing a transmission route of a control signal in the case of Fig. 6;
Fig. 8 is a diagram showing a case where an connection error has occurred between an optical transmission apparatus and an EMS in the submarine cable system shown in Fig. 5; and
Fig. 9 is a diagram showing a transmission route of a control signal in the case of Fig. 8.

### Description of Example Embodiment

Hereinbelow, example embodiments of the present disclosure will be described with reference to the drawings. Note that the following description and the attached drawings are appropriately shortened and simplified where appropriate to clarify the explanation. Further, each element shown in the drawings as a functional block that performs various processing can be configured of a CPU, a memory, and other circuits in terms of hardware. Further, the present disclosure can implement an arbitrary processing by causing the CPU (Central Processing Unit) to execute a computer program. Therefore, a skilled person can understand that these functional blocks can be implemented by a hardware configuration, a software configuration, or a combination thereof, and it is not to be limited to any one of them.

Further, the aforementioned program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line such as electric wires and optical fibers or a wireless communication line.

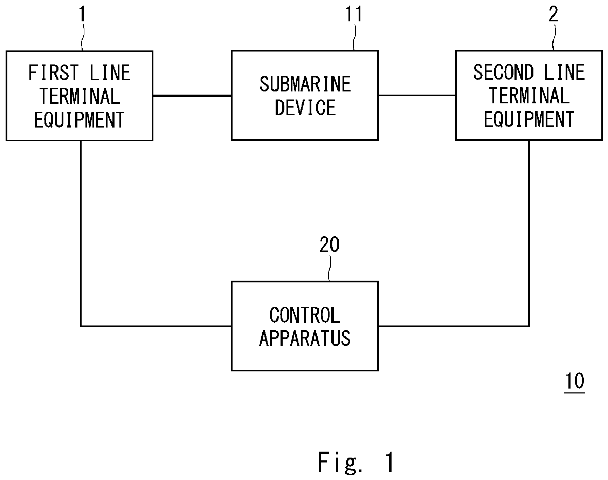

Fig. 1 is a diagram showing a configuration of a submarine cable system 10 according to an example embodiment. As shown in Fig. 1, the submarine cable system 10 includes a first line terminal equipment 1, a second line terminal equipment 2, a submarine device 11, and a control apparatus 20. The first line terminal equipment 1 and the second line terminal equipment 2 are installed in an on-land station building of a cable landing station. The submarine device 11 is deployed on the seabed between the first line terminal equipment 1 and the second line terminal equipment 2 and connected to the first line terminal equipment 1 and the second line terminal equipment 2 via a submarine cable. Note that only one submarine device is shown here, however in a submarine cable system which is a long-distance transmission system, a configuration in which a plurality of submarine devices are connected in a row via a submarine cable is adopted. The control apparatus 20 is installed in a building different from the station building in which the first line terminal equipment 1 is installed and the station building in which the second line terminal equipment is installed. Further, the control apparatus 20 may be installed in a station building in which the first line terminal equipment 1 is installed or a station building in which the second line terminal equipment is installed.

In the example shown in Fig. 1, the submarine device 11 is an optical amplifier. The optical amplifier amplifies an optical signal input from the first line terminal equipment 1 or the second line terminal equipment 2 and compensates for the optical loss associated with the transmission of the optical signal. The optical amplifier is controlled in accordance with a control signal from the control apparatus 20. For example, the control apparatus 20 is capable of controlling an amplification rate (gain) of the optical signal of the optical amplifier. The first line terminal equipment 1 and the second line terminal equipment 2 can perform communication with the submarine device 11 via submarine cables. The first line terminal equipment 1 and the second line terminal equipment 2 each converts the optical signal received from the control apparatus 20 into an optical signal and outputs the optical signal to the submarine device 11.

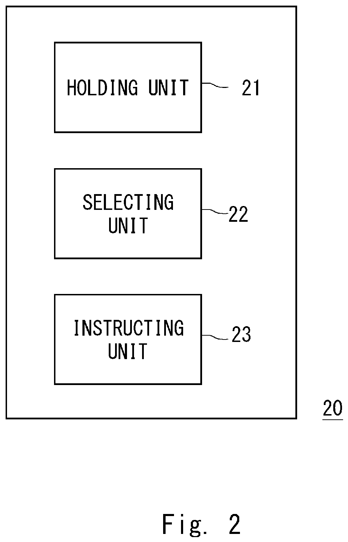

Fig. 2 is a diagram showing a configuration of the control apparatus 20 according to the example embodiment. The control apparatus 20 includes a holding unit 21, a selecting unit 22, and an instructing unit 23. The holding unit 21 holds the order of the priorities of the first line terminal equipment 1 and the second line terminal equipment 2 with respect to one submarine device 11. Specifically, the holding unit 21 holds the order of the priorities set by a first priority corresponding to the first line terminal equipment 1 and a second priority corresponding to the second line terminal equipment 2. Note that the first priority can be determined in accordance with, for instance, the distance from the first line terminal equipment 1 to the submarine device 11. Further, the second priority can be determined in accordance with, for instance, the distance from the second line terminal equipment 2 to the submarine device 11. For instance, the shorter the distance from the line terminal equipment to the submarine equipment 11, the higher can the priority of that line terminal equipment be made. The first priority and the second priority are determined by the control apparatus 20. Further, the first priority and the second priority may be given to the control apparatus 20 using an external apparatus (not illustrated).

The selecting unit 22 selects either one of the first line terminal equipment 1 or the second line terminal equipment 2 in accordance with the order of the priorities thereof held by the holding unit 21. The instructing unit 23 instructs the first line terminal equipment 1 or the second line terminal equipment 2 selected by the selecting unit 22 to output a control signal to the submarine device 11.

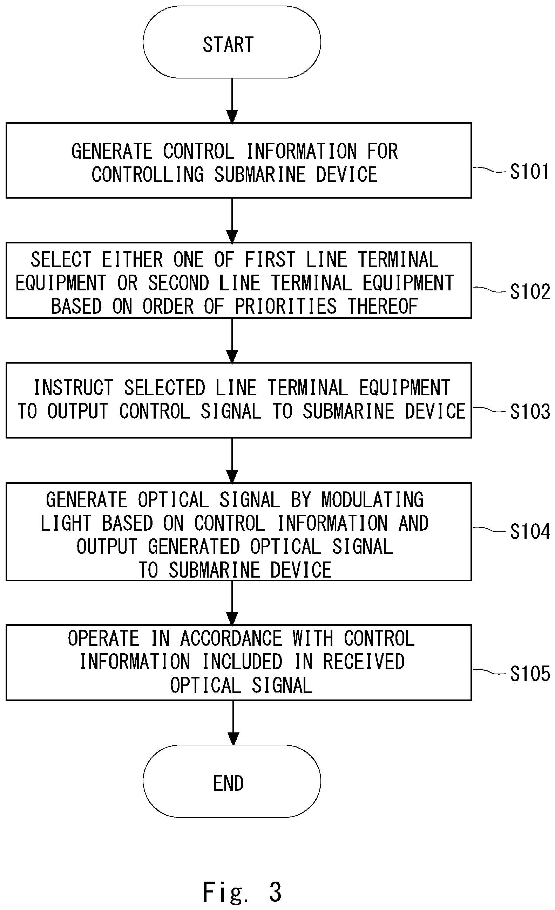

An example of an operation of the submarine cable system 10 will be described with reference to Fig. 3. The control apparatus 20 accepts operations performed by the user from an unillustrated interface and generates control information for controlling the submarine device 11 based on the accepted operation (S101). The selecting unit 22 of the control apparatus 20 selects either one of the first line terminal equipment 1 or the second line terminal equipment 2 based on the order of the priorities thereof (S102). In this description, it is assumed that the first line terminal equipment 1 is selected by the selecting unit 22.

The instructing unit 23 outputs the generated control information to the first line terminal equipment 1 via an electrical line. Accordingly, the instructing unit 23 instructs the first line terminal equipment 1 to output a control signal to the submarine device 11 (S103). The first line terminal equipment 1 generates an optical signal by modulating light based on the control information received from the instructing unit 23 of the control apparatus 20 and outputs the generated optical signal to the submarine device 11 (S104). The submarine device 11 receives the optical signal from the first line terminal equipment 1 and operates in accordance with the control information included in the received optical signal (S105).

A first specific example of the processing (S104) performed by the first line terminal equipment 1 in the aforementioned operation example will be described. The first line terminal equipment 1 generates an optical signal by modulating the control information of light having a specific wavelength and generates a wavelength multiplex optical signal by multiplexing the generated optical signal and an optical signal having wavelength different from the wavelength of the generated optical signal. The first line terminal equipment 1 outputs the generated wavelength multiplex optical signal to the submarine device 11.

A second specific example of the processing (S104) performed by the first line terminal equipment 1 in the aforementioned operation example will be described. The first line terminal equipment 1 multiplexes a plurality of optical signals having different wavelengths thereby generating a wavelength multiplex optical signal. The first line terminal equipment 1 superimposes low frequency components corresponding to the control information on the wavelength multiplex optical signal by modulating the generated wavelength multiplex optical signal based on the control information. The first line terminal equipment 1 outputs a wavelength multiplex optical signal in which low frequency components are superimposed to the submarine device 11.

As described above, in the example embodiment, it is possible to have either the first line terminal equipment 1 or the second line terminal equipment 2, both capable of outputting a control signal to the submarine device 11, output a control signal to the submarine device 11, whichever having the higher priority. By this configuration, it is possible to simplify the work a user needs to perform while ensuring a proper operation of the submarine device 11.

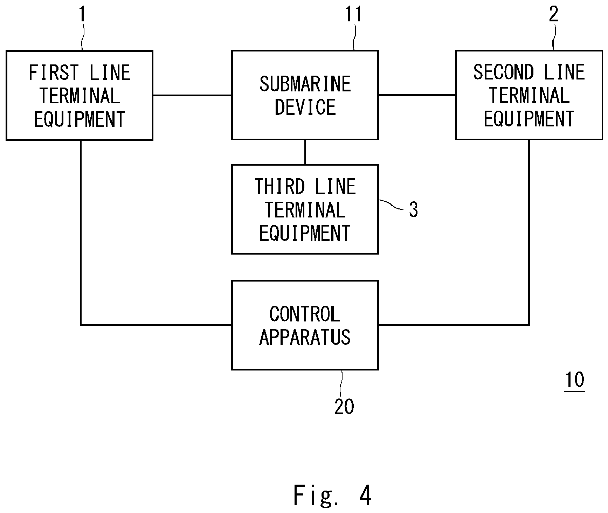

Fig. 4 is a diagram showing another configuration of a submarine cable system according to an example embodiment. In the example shown in Fig. 4, in addition to the configuration of the submarine cable system 10 shown in Fig. 1, a third line terminal equipment 3 that can perform communication with the submarine device 11 is further installed. Here, the submarine device 11 is an optical splitting device. The optical splitting device is laid on the seabed and is inserted in the middle of the submarine cable at a position between the first line terminal equipment 1 and the second line terminal equipment 2. The optical splitting device is connected to the third line terminal equipment 3 by a submarine cable.

A WDM (wavelength division multiplexing) optical signal is transmitted among the first line terminal equipment 1, the second line terminal equipment 2, and the third line terminal equipment 3 using the submarine cable. The optical splitting device is able to split a signal light transmitted from one line terminal equipment and output the split light to the other two line terminal equipment.

The optical splitting device performs wavelength separation based on a set value held by the optical splitting device itself. Note that this set value can be changed based on the control signal from the control apparatus 20. The wavelength separation is performed using, for instance, a WSS (wavelength selective switch). For instance, when the WDM optical signal including wavelengths λ1, λ2, and λ3 is input from the first line terminal equipment 1 to the optical splitting device, the optical splitting device performs wavelength separation of the WDM optical signal and outputs the optical signal of wavelength λ1 and the optical signal of wavelength λ2 to the second line terminal equipment 2 and outputs the optical signal of wavelength λ3 to the third line terminal equipment 3.

In the above-described separation of the WDM optical signal including the wavelengths λ1, λ2, and λ3, when an instruction to switch the wavelengths is instructed by a control signal, the optical splitting device can switch from a first state to a second state, the first state being a state in which the optical signals of the wavelengths λ1 and λ2 are output to the second line terminal equipment 2 and the optical signal of the wavelength λ3 is output to the third line terminal equipment 3 and a second state being a state in which the optical signal of the wavelength λ1 is output to the second line terminal equipment 2 and the optical signals of the wavelengths λ2 and λ3 are output to the third line terminal equipment 3.

Note that the optical splitter may have a ROADM (reconfigurable optical add/drop multiplexer) function. For instance, a part of the WDM optical signal may be split (Drop) by the WSS and a new optical signal to be transmitted to other line terminal equipment is inserted (Add) to the WDM optical signal, and then the obtained WDM optical signal is re-output to the submarine cable. In the example shown in Fig. 4, the control apparatus 20 shown in Fig. 2 is used. By this configuration, the control signal can be output from one of the line terminal equipment of higher priority.

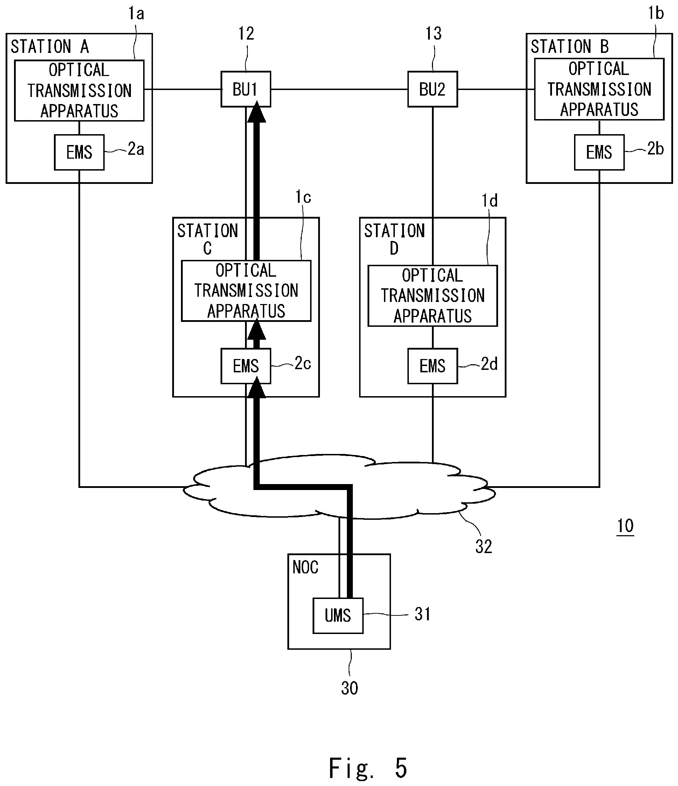

Hereinbelow, specific examples will be described with reference to Figs. 5 to 9. Fig. 5 is a diagram showing a configuration of a submarine cable system according to an example. In the example, four landing stations (station A, station B, station C, and station D) are installed. The landing stations (station A, station B, station C, and station D) have optical transmission apparatus 1a to 1d and EMSs (Element Management System) 2a to 2d installed therein, respectively.

Each of the EMSs 2a to 2d performs monitoring control of the respective optical transmission apparatuses 1a to 1d in the respective station buildings. Note that although not illustrated, other apparatuses such as a power feeding apparatus for feeding power to the submarine devices are installed in each terminal station building. Each of the EMSs 2a to 2d can also perform monitoring control of the status of operation of these apparatuses. Each of the optical transmission apparatuses 1a to 1d converts a control signal (an electric signal) of the submarine device received from each of the EMSs 2a to 2d into an optical signal and transmits it to the submarine cable.

As an example of the submarine device, two optical splitting devices (in Fig. 5, the first optical splitting device 12 indicated as BU (Branching Unit) 1 and the second optical splitting device 13 indicated as BU 2) are disposed on the optical path of the submarine cable between the optical transmission apparatus 1a of the station A and the optical transmission apparatus 1b of the station B. The first optical splitting device 12 and the second optical splitting device 13 are deployed on the seabed. Further, the optical transmission apparatus 1c of the station C is connected to the first optical splitting device 12 via a seabed cable, and the optical transmission apparatus 1d of the station D is connected to the second optical splitting device 13 via a seabed cable.

The monitoring information from each station building is transferred to a NOC (Network Operation Center) 30 via the network 32 and centrally monitored and controlled by the NOC. The NOC 30 is provided with a UMS (Unified Management System) 31. The UMS 31 monitors and controls the entire system cooperatively in cooperation with the EMSs 2a to 2d.

In such submarine cable system, a control signal for controlling a submarine device is transmitted from the UMS 31 and reaches, via the corresponding EMS, the optical transmission apparatus determined to transmit the control signal to the submarine device. Then, the optical transmission apparatus converts the control signal into an optical signal and transmits it to the submarine device.

The UMS 31 designates the EMS within the station building where the optical transmission apparatus determined to transmit the control signal is installed. However, when the submarine cable between the submarine device and the optical transmission apparatus is disconnected due to failures in the submarine cable and the like or when communication cannot be established between the optical transmission apparatus and the EMS or communication cannot be established between the EMS and the UMS 31, the control signal transmitted by the UMS 31 cannot reach the submarine device.

In such a case, the maintenance staff of the submarine cable system had to select a suitable control signal transmitting station based on the failure status of the entire system and output the control signal on a route that could avoid failures. The above works depend in part on the skill level of the maintenance staff, and thus in order to ensure a certain level of maintenance quality at all times, it has been desired to perform automatic determination and automatic processing by the system.

In order to solve this problem, in the present example embodiment, a control apparatus including the configuration shown in Fig. 2 is used as the UMS 31. That is, the UMS 31 holds, in advance, the order of the priorities of the transmitting stations for determining the line terminal equipment that transmits the control signal to each submarine equipment. In the present example embodiment, the order of the priorities of the transmitting stations with respect to the first optical splitting device 12 is station C > station A > station B in the descending order of the priorities and the order of the priorities of the transmitting stations with respect to the second optical splitting device 13 is station D > station B > station A in the descending order of the priorities.

In the example embodiment shown in Fig. 5, in addition to the configuration shown in Fig. 2, the UMS 31 is configured to confirm the failure status indicating whether relay of the control signal transmitted to the first optical splitting device 12 or the second optical splitting device 13 via the optical transmission apparatuses 1a to 1d can be carried out. Here, relaying refers to the optical transmission apparatuses 1a to 1d modulating light by the information included in the control signal input from the UMS 31 and outputting the respective optical signals modulated by the first optical splitting device 12 or the second optical splitting device 13. The UMS 31 holds the failure status (the warning status) in the entire system based on the warning information collected from each of the EMSs 2a to 2d and confirms the point in the cable where a failure has occurred (disconnection of the cable or the like).

Further, the UMS 31 carries out permanent alive monitoring of each of the EMSs 2a to 2d. Further, each of the EMSs 2a to 2d carries out permanent alive monitoring of the optical transmission apparatuses 1a to 1d controlled by the respective EMSs 2a to 2d. Further, the UMS 31 changes the order of the priorities of the optical transmission apparatus 1a to 1d held by the holding unit based on the failure status.

In Fig. 5, it is assumed that failures have not occurred in any points in the submarine cable and that no error has been detected in the state of connection between the UMS 31 and each of the EMSs 2a to 2d and the state of connection between each of the EMSs 2a to 2d and the optical transmission apparatuses 1a to 1d controlled by the respective EMSs 2a to 2d. In such a case, when the maintenance staff carries out the setting change of the first optical splitting device 12, the maintenance staff operates the UMS 31 and outputs a control signal for the first optical splitting device 12. The control signal output from the UMS 31 is transmitted to the EMS 2c of the station C in accordance with the aforementioned order of the priorities of the transmission stations. The EMS 2c transfers the control signal to the optical transmission apparatus 1c installed in the station C.

The optical transmission apparatus 1c that has received the control signal converts the received control signal into an optical signal and sends out the optical signal to the submarine cable. The control signal (the optical signal) sent out to the submarine cable reaches the first optical splitting device 12 via the submarine cable. The first optical splitting device 12 that has received the control signal (the optical signal) carries out the processing in accordance with the received control signal. The flow of the control signal is indicated by the arrow shown in Fig. 5.

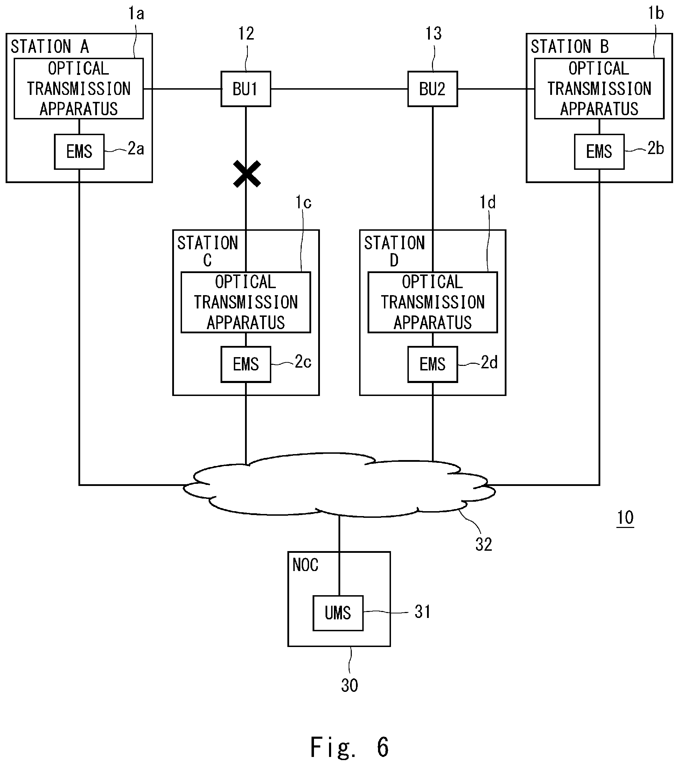

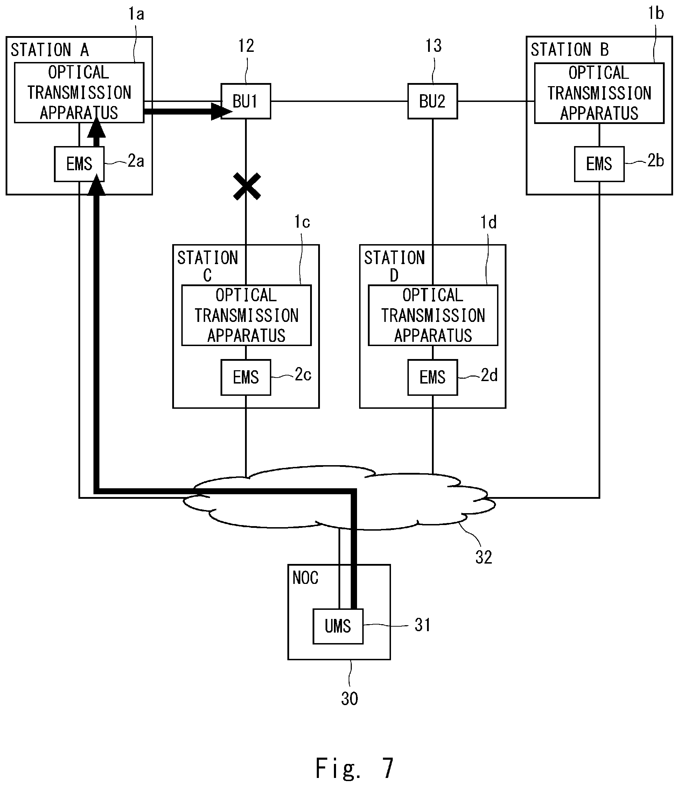

Here, the case in which a failure has occurred in the cable of the submarine cable system shown in Fig. 5 will be described with reference to Figs. 6 and 7. In Fig. 6, it is assumed that a failure has occurred at a point shown by the reference sign "X" in the submarine cable between the first optical splitting device 12 and the optical transmission apparatus 1c. That is, the station C that has been relaying the control signal can no longer relay the control signal.

As an example of a method of detecting a failure that has occurred in the cable, a backscattering light of the optical signal sent from the optical transmission apparatus to a submarine device is monitored and disconnection of the submarine cable can be detected when the backscattering light can no longer be detected. Further, it is possible to monitor the reflected light or the returned light of the optical signal transmitted from the optical transmission apparatus to the submarine device and detect disconnection of the submarine cable when the reflected light or the returned light can no longer be detected.

In this case, the optical transmission apparatus affected by the failure that has occurred in the cable detects the line failure such as disconnection of the submarine cable or the like and notifies the host EMS of the warning information. The EMS which has received the warning information from the optical transmission apparatus transfers the warning information to the UMS 31. By this configuration, the warning information of the entire system is aggregated in the UMS 31. The UMS 31 identifies that a failure has occurred in the cable between the station C and the first optical splitting device 12 based on the warning information. By this configuration, the UMS 31 confirms that the control signal cannot be transmitted to the first optical splitting device 12 via the station C.

The UMS 31 changes the order of the priorities of the transmitting stations with respect to the first optical splitting device 12 from "station C > station A > station B" to "station A > station B" when the optical transmission apparatus 1c of the station C that has been relaying the control signal can no longer relay the control signal. That is, the priority of the transmission apparatus which can no longer relay the control signal is deleted from the order of the priorities held by the holding unit 21. In this situation, when the maintenance staff carries out the setting change of the first optical splitting device 12, the UMS 31 selects, in accordance with the order of the priorities of the transmitting stations, the transmission apparatus 1a of the station A. That is, the UMS 31 selects the optical transmission apparatus 1a of the station A, which has the next highest priority following the priority of the optical transmission apparatus 1c of the station C, from among the optical transmission apparatus 1a of the station A and the optical transmission apparatus 1b of the station B.

By this configuration, the control signal issued by the UMS 31 is sent to the EMS 2a of the station A and the EMS 2a transfers the control signal to the optical transmission apparatus 1a in the station A. The optical transmission apparatus 1a converts the received control signal into an optical signal and transmits it to the submarine cable. The control signal (the optical signal) sent out to the submarine cable reaches the first optical splitting device 12 via the submarine cable. The first optical splitting device 12 that has received the control signal (the optical signal) carries out the processing in accordance with the received control signal. The flow of the control signal is indicated by the arrow shown in Fig. 7.

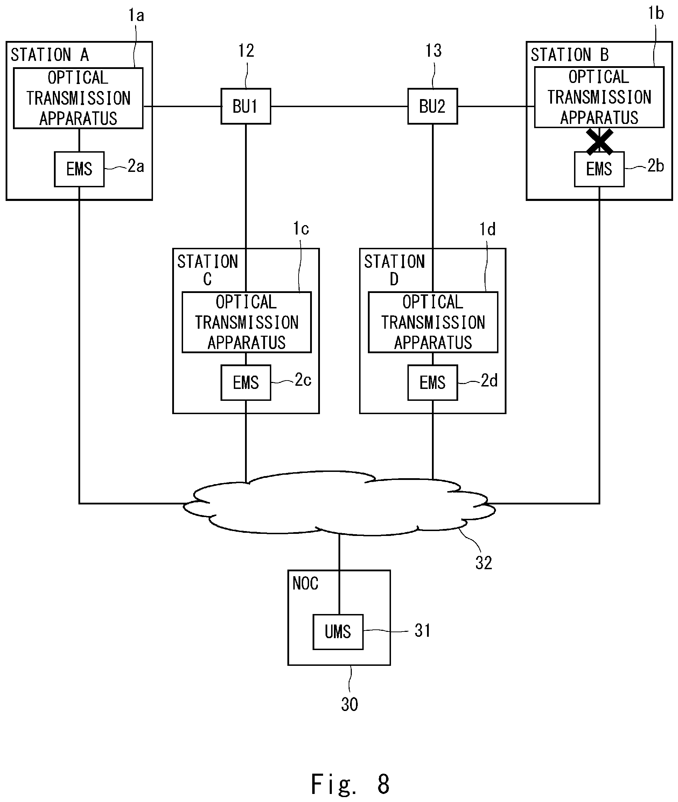

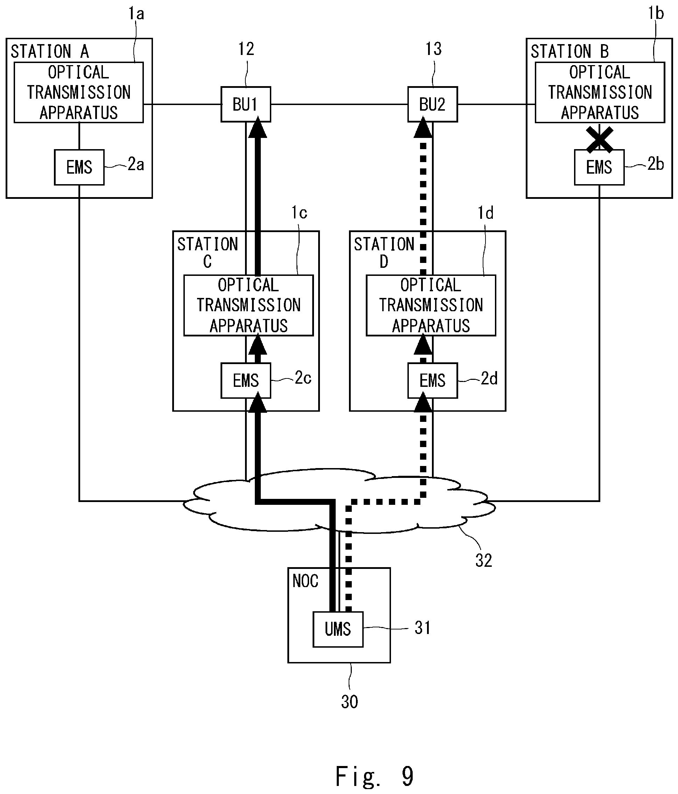

Next, the case in which a connection error between the optical transmission apparatus and the EMS has occurred in the submarine cable system shown in Fig. 5 will be described with reference to Figs. 8 and 9. In Fig. 8, it is assumed that a connection error has occurred at a point shown by the reference sign "X" in the submarine cable between the optical transmission apparatus 1b and the EMS 2b of the station B.

In this case, the EMS 2b of the station B carries out alive monitoring, detects a connection error between the EMS 2b and the optical transmission apparatus 1b (a failure in the station B), and notifies the UMS 31 about the detected information. The UMS 31 becomes aware of the connection error occurring between the EMS 2b and the optical transmission apparatus 1b based on the information the EMS 2b has notified it about. Here, the UMS 31 confirms that the control signal cannot be transmitted to the first optical splitting device 12 and the second optical splitting device 13 via the station B. The UMS 31 changes the order of the priorities of the transmitting stations with respect to the first optical splitting device 12 from "station C > station A > station B" to "station C > station A" and changes the order of the priorities of the transmitting stations with respect to the second optical splitting device 13 from "station D > station B > station A" to "station D > station A".

In this situation, when the maintenance staff carries out the setting change of the first optical splitting device 12, the UMS 31 selects, in accordance with the order of the priorities of the transmitting stations, the transmission apparatus 1c of the station C. The control signal issued by the UMS 31 is sent to the EMS 2c, and the EMS 2c transfers the control signal to the optical transmission apparatus 1c in the station C. The optical transmission apparatus 1c converts the received control signal into an optical signal and transmits it to the submarine cable. The control signal (the optical signal) sent out to the submarine cable reaches the first optical splitting device 12 via the submarine cable. The first optical splitting device 12 that has received the control signal (the optical signal) carries out the processing in accordance with the received control signal. The flow of the control signal is indicated by the arrow shown in Fig. 9.

When the maintenance staff carries out the setting change of the second optical splitting device 13, the UMS 31 selects, in accordance with the order of the priorities of the transmitting stations, the transmission apparatus 1d of the station D. The control signal issued by the UMS 31 is sent to the EMS 2d and the EMS 2d transfers the control signal to the optical transmission apparatus 1d in the station D. The optical transmission apparatus 1d converts the received control signal into an optical signal and transmits it to the submarine cable. The control signal (the optical signal) sent out to the submarine cable reaches the second optical splitting device 13 via the submarine cable. The second optical splitting device 13 that has received the control signal (the optical signal) carries out the processing in accordance with the received control signal. The flow of the control signal is indicated by the arrow shown in Fig. 9.

As described above, in the examples, it is possible to change the order of the priorities of the line terminal equipment (the optical transmission apparatuses) that relay a control signal for controlling the submarine device based on the failure status (the warning status) of the entire system confirmed by the control apparatus in the submarine cable system. In accordance with the changed order of the priorities, the line terminal equipment which transmits the control signal is determined, and by transmitting the control signal to the determined terminal equipment, the signal can be transmitted via the route automatically avoiding the point in the cable where a failure has occurred.

By this configuration, when the control signal is not transmitted to the submarine equipment due to the failures in the cable and the like, it is possible for the system to automatically designate a route by which it is possible to avoid any failures and transmit the control signal by this route. As a result, there is no need for a maintenance staff to determine the status and perform the operations, and thus there is no need to rely on the skills of individual maintenance staff.

Note that the present disclosure is not limited to the aforementioned example embodiments and can be modified as appropriate without departing from the gist of the present disclosure.

The whole or part of the example embodiments disclosed above can be described as, but not limited to, the following supplementary notes.

### (Supplementary note 1)

A submarine device control apparatus comprising:
a holding unit configured to hold an order of priorities of a first line terminal equipment and a second line terminal equipment, both adapted to perform communication with a submarine device;
a selecting unit configured to select either one of the first line terminal equipment or the second line terminal equipment in accordance with the order of the priorities; and
an instructing unit configured to instruct the selected line terminal equipment to output a control signal to the submarine device.

### (Supplementary note 2)

The submarine device control apparatus described in Supplementary note 1, wherein
the submarine device is an optical splitting device, and
the holding unit further holds an order of priority of a third line terminal equipment adapted to perform communication with the submarine device,
the submarine device control apparatus further comprising:
   a failure detecting unit configured to confirm a failure status indicating whether or not output of the control signal to the submarine device using the first, the second, or the third line terminal equipment can be carried out; and
   a priority order changing unit configured to change the order of priorities held by the holding unit based on the failure status.

### (Supplementary note 3)

The submarine device control apparatus described in Supplementary note 2, wherein when the failure detecting unit determines that either one of the first line terminal equipment, the second line terminal equipment, or the third line terminal equipment can no longer output the control signal, the priority order changing unit deletes, from the order of the priorities, the line terminal equipment which can no longer output the control signal.

The present disclosure has been described above with reference to the example embodiments, however the present disclosure is not limited to the above. The configurations and details of the present disclosure can be modified in various ways that can be understood by those skilled in the art within the scope of the disclosure.

This application is based upon and claims the benefit of priority from Japanese patent application No. 2019-159467, filed on September 2, 2019, the disclosure of which is incorporated herein in its entirety by reference.

### Reference Signs List

- 1: FIRST LINE TERMINAL EQUIPMENT
- 2: SECOND LINE TERMINAL EQUIPMENT
- 3: THIRD LINE TERMINAL EQUIPMENT
- 1a to 1d: OPTICAL TRANSMISSION APPARATUS
- 2a to 2d: EMS
- 10: SUBMARINE CABLE SYSTEM
- 11: SUBMARINE DEVICE
- 12: FIRST OPTICAL SPLITTING DEVICE
- 13: SECOND OPTICAL SPLITTING DEVICE
- 20: CONTROL APPARATUS
- 21: HOLDING UNIT
- 22: SELECTING UNIT
- 23: INSTRUCTING UNIT
- 30: NOC
- 31: UMS
- 32: NETWORK

## Claims

1. A submarine cable system comprising:
a submarine device;
a first line terminal equipment adapted to perform communication with the submarine device;
a second line terminal equipment adapted to perform communication with the submarine device; and
a control apparatus configured to select either one of the first line terminal equipment or the second line terminal equipment based on an order of priorities thereof and to instruct the selected one of the line terminal equipment to output a control signal to the submarine device.

2. The submarine cable system according to Claim 1, wherein the order of the priorities is based on a distance from the first line terminal equipment to the submarine device and a distance from the second line terminal equipment to the submarine device.

3. The submarine cable system according to Claim 1 or 2, further comprising a third line terminal equipment adapted to perform communication with the terminal device,
wherein when the third line terminal equipment that has been outputting the control signal can no longer output the control signal, the control apparatus uses either one of the first line terminal equipment or the second line terminal equipment in accordance with the order of the priorities thereof.

4. The submarine cable system according to Claim 3, wherein
the third line terminal equipment is higher in the order of the priorities than the first line terminal equipment and the second line terminal equipment, and
the control apparatus uses either the first line terminal equipment or the second line terminal equipment, the order of the priorities thereof being the next higher after the third line terminal equipment.

5. The submarine cable system according to Claim 3 or 4, wherein when disconnection of the submarine cable between the third line terminal equipment and the submarine device is detected, the control apparatus determines that third line terminal equipment can no longer output the control signal.

6. The submarine cable system according to Claim 3 or 4, wherein when a failure occurs in the third line terminal equipment, the control apparatus determines that the third line terminal equipment can no longer output the control signal.

7. The submarine cable system according to any one of Claims 1 to 6, wherein the submarine device is an optical splitting device.

8. A submarine device control apparatus comprising:
holding means for holding an order of priorities of a first line terminal equipment and a second line terminal equipment, both adapted to perform communication with a submarine device;
selecting means for selecting either one of the first line terminal equipment or the second line terminal equipment in accordance with the order of the priorities; and
instructing means for instructing the selected line terminal equipment to output a control signal to the submarine device.

9. A method for controlling a submarine device comprising:
selecting, in accordance with an order of priorities of a first line terminal equipment and a second line terminal equipment both adapted to perform communication with a submarine device, either one of the first line terminal equipment or the second line terminal equipment; and
instructing the selected line terminal equipment to output a control signal to the submarine device.

10. A non-transitory computer-readable medium storing a program for causing a computer to execute the processes of:
selecting, in accordance with an order of priorities of a first line terminal equipment and a second line terminal equipment both adapted to perform communication with a submarine device, either one of the first line terminal equipment or the second line terminal equipment; and
instructing the selected line terminal equipment to output a control signal to the submarine device.
